# EUROPEAN PATENT APPLICATION

(11) **EP 4 335 332 A1**
(43) Date of publication of application: **13.03.2024**
(21) Application number: 22194957.1
(22) Date of filing: 09.09.2022
(51) Int. Cl.: A47J 31/52

(54) **BEVERAGE PREPARATION MANAGEMENT**

(71) Applicant: Versuni Holding B.V., 5656 AE Eindhoven (NL)
(72) Inventor: LOOPSTRA, Kasper Roelof, 5656 AE Eindhoven (NL); TJEERDSMA, Peter, 5656 AE Eindhoven (NL); KMETOVIC, Ivan, 5656 AE Eindhoven (NL)
(74) Representative: Vollering, Stefanus Franciscus Maria

(57) **Abstract**

There is provided a method for managing a request for preparation of a beverage. The method is performed by a first entity. The method comprises assigning (110) a first identifier to the request. The request is generated at a user equipment. The method comprises transmitting (112) a message towards a second entity. The message comprises the first identifier. The first identifier allows the first entity to determine whether or not a status update, generated by a domestic appliance that is to prepare the beverage, corresponds to a status update on the preparation of the beverage.

## Description

### FIELD OF THE INVENTION

The disclosure relates to beverage preparation management and, more specifically, to methods and apparatus for managing a request for preparation of a beverage and a status update on the preparation of the beverage.

### BACKGROUND OF THE INVENTION

In the past, in order for a user to request that a domestic appliance prepares a beverage, the user had to interact with the domestic appliance itself. While this is still an option, technology has advanced for the convenience of the user and it is now possible for a user to make such a request remotely via a user equipment (UE) that is separate to the domestic appliance. This means that a user can conveniently remotely request preparation of a beverage while they are away from the domestic appliance and the beverage will be ready for them when they reach the domestic appliance. This can be particularly beneficial for the fast pace of modern life. For example, a user may remotely request preparation of a beverage via a UE while they are getting ready for work and the beverage will be ready for them at the domestic appliance when they are ready to leave for work.

The UE that a user may use to request preparation of a beverage can be, for example, a smart device such as a smartphone or tablet. An application (or 'app') may be running on the UE and the user can request preparation of the beverage via the application. The application may provide the user with a choice of different types of beverage. For example, where the domestic appliance is a coffee machine, the choice of beverages may comprise different types of coffee, e.g. cappuccino, latte, americano, ristretto, lungo, espresso, flat white, etc. In some cases, the application can allow the user to customise a beverage to their preferences. For example, where the domestic appliance is a coffee machine, the user may be able to select the blend of coffee, the strength, the volume, temperature, the milk content, etc.

It is useful for a user to be provided with a status update on their beverage. This can be provided via a user interface (e.g. display) on the domestic appliance itself. However, not all appliances are provided with a user interface that allows a status update to be provided. It is also not useful for a status update to be provided on the domestic appliance itself in the case of a remote beverage preparation request, since such a request is generally made when the user is away from the domestic appliance. In these cases, it can instead be beneficial for a user to receive the status update via (e.g. an app running on) the UE that the user used to request preparation of a beverage. However, this generally requires a way to register that a beverage is being prepared for a particular UE (or app), such that the correct UE (or app) can be provided with a status update on the preparation of that beverage. This is in order to only send a notification to the UE (or app) that sent the request for the beverage. This can be particularly important in a situation where multiple users use the same appliance, such in the case of multiple members of the same household using the same appliance.

However, although each user in a household can (in theory) create their own user account to link to a domestic appliance, it is common for many households to use one and the same (i.e. a single) account linked to the domestic appliance. In this case, a single user account identifier is used to identify a user requesting preparation of a beverage but the request can actually be from any number of different UEs and not just the user account holder. It is thus not possible to identify the different users individually as they are sharing the same account. This means that a user to which the account is registered can receive a status update for the preparation of a beverage requested by another user. This can be frustrating for the user to which the account is registered but it is also problematic in terms of confidentiality, privacy, and General Data Protection Regulation (GDPR) compliance, since the user to which the account is registered has knowledge of other user's requests.

Another option is to identify the different users individually via their respective UEs in order to direct a status update to the correct user. However, while this prevents the user to which the account is registered having knowledge of other user's request, the fact that an individual user can be identified still suffers from the same issues with confidentiality, privacy, and GDPR compliance.

### SUMMARY OF THE INVENTION

As noted above, the limitation with existing techniques is that it is not possible to provide a user with a status update on the preparation of their beverage in private and confidential manner. It would thus be valuable to have an improvement aimed at addressing these limitations.

Therefore, according to a first aspect, there is provided a first method for managing a request for preparation of a beverage. The first method is performed by a first entity. The first method comprises assigning a first identifier to the request. The request is generated at a user equipment (UE). The first method also comprises transmitting a message towards a second entity. The message comprises the first identifier. The first identifier allows the first entity to determine whether or not a status update, generated by a domestic appliance that is to prepare the beverage, corresponds to a status update on the preparation of the beverage.

According to a second aspect, there is provided a second method for managing a status update on preparation of a beverage. The second method is performed by a first entity. The second method comprises acquiring information from a third entity. The information comprises a status update generated by a domestic appliance that is to prepare the beverage and a first identifier assigned to a request for the preparation of the beverage. The request is generated at a UE. The first identifier allows the first entity to determine whether or not the status update generated by the domestic appliance corresponds to a status update on the preparation of the beverage.

According to a third aspect, there is provided a third method for managing a request for preparation of a beverage. The third method is performed by a second entity. The third method comprises receiving a message from a first entity. The message comprises a first identifier assigned to the request. The request is generated at a UE. The first identifier allows the first entity to determine whether or not a status update, generated by a domestic appliance that is to prepare the beverage, corresponds to a status update on the preparation of the beverage.

According to a fourth aspect, there is provided a fourth method for managing a status update on preparation of a beverage. The fourth method is performed by a third entity. The fourth method comprises providing information to a first entity. The information comprises a status update generated by a domestic appliance that is to prepare the beverage and a first identifier assigned to a request for the preparation of the beverage. The request is generated at a UE and the first identifier allows the first entity to determine whether or not the status update generated by the domestic appliance corresponds to a status update on the preparation of the beverage.

According to a fifth aspect, there is provided a system comprising any one or more of a first entity, a second entity, and a third entity. The first entity comprises processing circuitry configured to operate in accordance with the first method and/or second method described earlier. The second entity comprises processing circuitry configured to operate in accordance with the third method described earlier. The third entity comprises processing circuitry configured to operate in accordance with the fourth method described earlier.

According to a sixth aspect, there is provided a computer program product comprising a computer readable medium. The computer readable medium has a computer readable code embodied therein. The computer readable code is configured such that, on execution by a suitable computer or processor, the computer or processor is caused to perform any one or more of the first method described earlier, second method described earlier, third method described earlier, and fourth method described earlier.

According to the aspects and embodiments described above, the limitations of existing techniques are addressed. In particular, according to the above-described aspects, a first identifier is assigned to the beverage preparation request and this first identifier allows a determination to be made as to whether or not a status update, generated by a domestic appliance that is to prepare the beverage, corresponds to a status update on the preparation of that beverage. In this way, it is possible to identify whether a status update relates to a beverage requested by a user without the need for the user to be identified.

As mentioned earlier, in existing techniques, either users are individually identified via their respective UEs in order to direct a status update to the correct user or the user account holder is notified of status updates for other users. However, there are issues associated with this. Therefore, advantageously, the first identifier referred to herein is instead assigned to the request for preparation of the beverage. That is, the first identifier referred to herein is not linked to a user account, a UE, or a user. Instead, it is linked to the actual request for preparation of the beverage. In this way, the first identifier referred to herein cannot be used to identify the user that requested the beverage and only the first entity that assigned the first identifier to the request for preparation of the beverage is able to link a status update for preparation of the beverage to that beverage.

This enhances confidentiality, privacy, and GDPR compliance. If users share a user account (for communication with the domestic appliance), each user can identify the progress of their own beverage preparation, without other users being able to deduce whose beverage is being prepared. Moreover, as the user does not need to be identified, less memory capacity is needed at the domestic appliance itself as the need to store user identification information for each user is eliminated.

There are thus provided improved techniques for beverage preparation management and, more specifically, advantageous techniques for managing a request for preparation of a beverage and a status update on the preparation of the beverage.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a schematic illustration of a first entity according to an embodiment;
Fig. 2 is a block diagram illustrating a first method according to an embodiment;
Fig. 3 is a block diagram illustrating a second method according to an embodiment;
Fig. 4 is a schematic illustration of a second entity according to an embodiment;
Fig. 5 is a block diagram illustrating a third method according to an embodiment;
Fig. 6 is a schematic illustration of a third entity according to an embodiment;
Fig. 7 is a block diagram illustrating a fourth method according to an embodiment;
Fig. 8 is a schematic illustration of a system according to an embodiment;
Fig. 9 is a signalling diagram illustrating an exchange of signals in a system according to an embodiment; and
Fig. 10 is a schematic illustration of a system according to an embodiment.

### DETAILED DESCRIPTION OF EMBODIMENTS

As noted above, there is provided herein a technique for managing a request for preparation of a beverage and a corresponding technique for managing a status update on the preparation of the beverage. The request referred to herein may also be referred to as a command.

Herein, a beverage may be any type of beverage. More specifically, the beverage referred to herein can be any liquid that is intended for human consumption. A beverage can also be referred to as a drink. The beverage referred to herein can be a hot beverage or a cold beverage. Examples of the beverage referred to herein include, but are not limited to, coffee, tea, hot chocolate, water, milk, soda, juice, smoothie, energy drink, sports drink, or any other type of beverage. The beverage referred to herein can be a carbonated beverage, i.e. a beverage that has carbon dioxide (CO2) added to it, such as soda, sports drink, energy drink, or any other type of carbonated beverage. Alternatively, the beverage referred to herein can be an uncarbonated beverage, i.e. a beverage that does not have CO2 added to it, such as coffee, tea, hot chocolate, water, milk, juice, smoothie, energy drink, or any other type of uncarbonated beverage. The preparation of tea or coffee may comprise brewing. Thus, the request for preparation of a beverage may also be referred to as a brew request in this case.

The beverage referred to herein can be prepared by a domestic appliance. The domestic appliance referred to herein can be a connected (or smart) appliance in that it can have the ability to connect to other appliances via a wireless protocol. The domestic appliance referred to herein may thus be an Internet of Things (IoT) appliance. The domestic appliance referred to herein may be fully automatic or semi-automatic.

Herein, a domestic appliance can be an appliance that is used in domestic setting, such as a home, a household, a residence, or any other domestic setting. The appliance referred to herein may also be referred to as a machine or device. Herein, an domestic appliance may be any type of domestic appliance that is capable of preparing (e.g. configured to or operable to prepare) a beverage.

The domestic appliance referred to herein can be capable of preparing one or more types of beverage, such as coffee, tea, hot chocolate, water, milk, soda, juice, smoothie, energy drink, sports drink, and/or any other type of beverage. A domestic appliance capable of preparing coffee can be referred to as a coffee machine (or coffee maker). Herein, a coffee machine can be any type of coffee machine, such as a bean to cup coffee machine (e.g. comprising a grinder for grinding coffee beans), a capsule/pod coffee machine, an espresso coffee machine, a filter coffee machine, or any other coffee machine. A domestic appliance capable of preparing tea can be referred to as a tea maker. A domestic appliance capable of preparing hot chocolate can be referred to as a hot chocolate maker. A domestic appliance capable of preparing juice can be referred to as a juicer. A domestic appliance capable of preparing smoothies can be referred to as a smoothie maker. A domestic appliance capable of preparing a carbonated beverage can be referred to as a carbonating device.

The request for preparation of a beverage referred to herein is generated at a user equipment (UE), such as via an application (or 'app', e.g. a mobile application) running on the UE. The references herein to the generation of the request relate to the generation of the request for preparation of the beverage. That is, generation of the request can be understood to mean the initiation of a beverage request by a user. Separately to this, a brew instruction may be formulated based on a recipe selected by the user. The application referred to herein can be used to control the domestic appliance that is to prepare a beverage. The UE referred to herein can be remote from the domestic appliance that is to prepare the beverage. Thus, the preparation of the beverage referred to herein can be requested remotely.

Herein, a UE can be any device used directly by an end user to communicate. Examples of the UE referred to herein include, but are not limited to, a smart device (e.g. a smart phone, a tablet, a smart speaker such as an Alexa speaker, a smart watch, or any other smart device), a mobile phone, a cell phone, a voice over IP (VoIP) phone, a wireless local loop phone, a desktop computer, a personal digital assistant (PDA), a gaming console or device, a wearable device, a laptop, a laptop-embedded equipment (LEE), a laptop-mounted equipment (LME), a vehicle-mounted wireless device, or any other UE.

A UE may support device-to-device (D2D) communication and may in this case be referred to as a D2D communication device. The UE referred to herein may represent the endpoint of a wireless connection, in which case the UE may be referred to as a wireless terminal. The UE referred to herein may be mobile, in which case the UE may be referred to as a mobile device or a mobile terminal.

The techniques described herein can be performed by a first entity, a second entity, and a third entity. The first entity referred to herein can be the UE, an entity of a cloud environment, or an entity of a backend architecture. The second entity referred to herein can be an entity of a backend architecture, an entity of a cloud environment, or the domestic appliance. The third entity referred to herein can be an entity of a backend architecture, an entity of a cloud environment, or the domestic appliance.

The backend architecture referred to herein may also be referred to as a backend platform. The cloud environment referred to herein may also be referred to as the cloud or a cloud computing environment. The backend architecture and the cloud environment referred to herein can be managed by different service providers or the same service providers. That is, the backend architecture can provide resources that are managed by a service provider (e.g. providing services to one or both of the domestic appliance and the UE), whereas the cloud environment can provide resources that are managed by one or more other service providers (e.g. providing services to users of the domestic appliance, but these resources may not be directly related to the domestic appliance itself).

The first entity referred to herein is a different entity from the second entity referred to herein. The first entity referred to herein is a different entity from the third entity referred to herein. The second entity referred to herein and the third entity referred to herein may be the same entity or different entities. For example, the method described herein in respect of the second entity and the method described herein in respect of the third entity may be performed by the same entity or may be performed by two separate entities.

Any one or more of the (first, second, and third) entities referred to herein may communicate directly with the domestic appliance or indirectly with the domestic appliance, such as via one or more cloud environments. Similarly, the domestic appliance may communicate directly with any one or more of the (first, second, and third) entities referred to herein or indirectly with any one or more of the (first, second, and third) entities referred to herein, such as via one or more cloud environments.

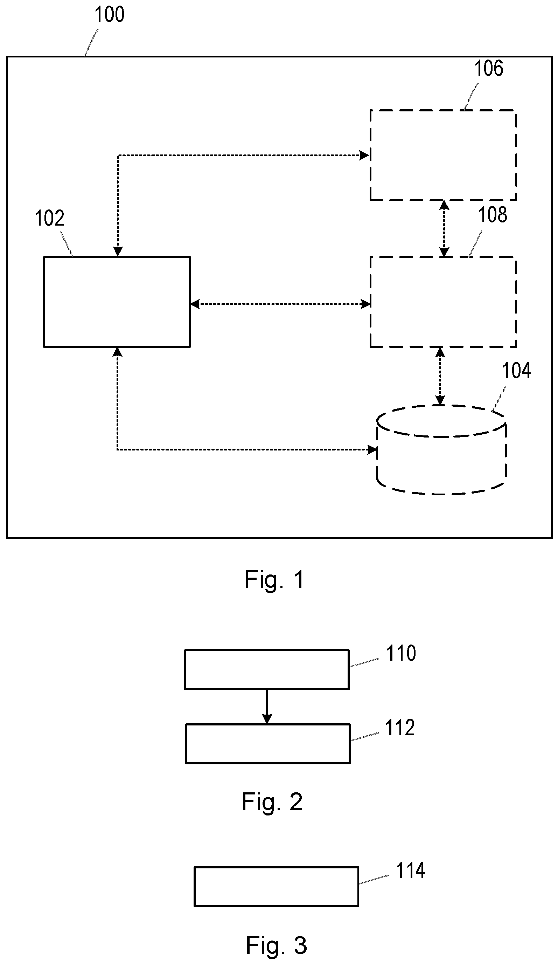

Fig. 1 illustrates the first entity 100 according to an embodiment. The first entity 100 can be for managing a request for preparation of a beverage and/or for managing a status update on preparation of a beverage.

As illustrated in Fig. 1, the first entity 100 comprises processing circuitry (or logic) 102. The processing circuitry 102 controls the operation of the first entity 100 and can implement the method described herein in respect of the first entity 100. The processing circuitry 102 can be configured or programmed to control the first entity 100 in the manner described herein.

The processing circuitry 102 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the first entity 100. In particular implementations, each of the one or more hardware components can be configured to perform, or is for performing, individual or multiple steps of the method described herein in respect of the first entity 100. The processing circuitry 102 can be configured to run software to perform the method described herein in respect of the first entity 100. The processing circuitry 102 can thus be implemented in numerous ways, with software and/or hardware, to perform the various functions described herein in respect of the first entity 100.

Briefly, the processing circuitry 102 of the first entity 100 is configured to assign a first identifier to a request for preparation of a beverage. The request is generated at a UE. The processing circuitry 102 of the first entity 100 is configured to transmit a message towards a second entity. The message comprises the first identifier. Alternatively or in addition, the processing circuitry 102 of the first entity 100 is configured to acquire information from a third entity. The information comprises a status update generated by a domestic appliance that is to prepare the beverage and the first identifier assigned to the request for the preparation of the beverage. The first identifier allows the first entity 100 to determine whether or not a status update, generated by a domestic appliance that is to prepare the beverage, corresponds to a status update on the preparation of the beverage.

As illustrated in Fig. 1, the first entity 100 may optionally comprise a memory 104. Alternatively, the memory 104 may be external to (e.g. separate to or remote from) the first entity 100. The memory 104 may comprise any type of non-transitory machine-readable medium, such as at least one cache or system memory. The memory 104 may comprise a volatile or a non-volatile memory. Examples of the memory 104 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 102 can be communicatively coupled (e.g. connected) to the memory 104. The processing circuitry 102 may be configured to communicate with and/or connect to the memory 104. The memory 104 may be for storing program code or instructions which, when executed by the processing circuitry 102, cause the first entity 100 to operate in the manner described herein. For example, the memory 104 may be configured to store program code or instructions that can be executed by the processing circuitry 102 to cause the first entity 100 to operate in accordance with the method described herein in respect of the first entity 100. Alternatively or in addition, the memory 104 can be configured to store any information, data, messages, requests, responses, indications, notifications, signals, or similar, that are described herein. The processing circuitry 102 may be configured to control the memory 104 to store information, data, messages, requests, responses, indications, notifications, signals, or similar, that are described herein.

As illustrated in Fig. 1, the first entity 100 may optionally comprise a user interface 106. The user interface 106 can be configured to render (or output, display, or provide) information required by or resulting from the method described herein. For example, the user interface 106 may be configured to render (or output, display, or provide) any information, data, messages, requests, responses, indications, notifications, signals, or similar, that are described herein. Alternatively or in addition, the user interface 106 can be configured to receive a user input. For example, the user interface 106 may allow a user to manually enter information or instructions, interact with, and/or control the first entity 100. Thus, the user interface 106 may be a user interface that enables the rendering (or outputting, displaying, or providing) of information and/or that enables a user to provide a user input. For example, the user interface 106 may be configured to enable a user to input a request for the preparation of a beverage.

The user interface 106 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Fig. 1, the first entity 100 may optionally comprise a communications interface (or communications circuitry) 108. The communications interface 108 can be communicatively coupled (e.g. connected) to the processing circuitry 102, the memory 104, and/or the user interface 106. Although the communications interface 108 and the user interface 106 are illustrated as separate interfaces, in other embodiments, the communications interface 108 may be part of the user interface 106. The processing circuitry 102 may be configured to communicate with and/or connect to the communications interface 108. In some embodiments, the processing circuitry 102 can be configured to control the communications interface 108 to operate in the manner described herein. The communications interface 108 can be for enabling the first entity 100, or components of the first entity 100 (e.g. the processing circuitry 102, the memory 104, the user interface 106, and/or any other components of the first entity 100), to communicate with and/or connect to each other and/or one or more other components.

For example, the communications interface 108 may be operable to allow the processing circuitry 102 to communicate with and/or connect to the memory 104 and/or vice versa. Similarly, the communications interface 108 may be operable to allow the processing circuitry 102 to communicate with and/or connect to the user interface 106 and/or vice versa. Similarly, the communications interface 108 may be operable to allow the processing circuitry 102 to communicate with and/or connect to any one or more other entities (e.g. any one or more of the second entity, the third entity, and any other entity) referred to herein. The communications interface 108 can be configured to transmit and/or receive information, data, messages, requests, responses, indications, notifications, signals, or similar, that are described herein. The processing circuitry 102 may be configured to control the communications interface 108 to transmit and/or receive information, data, messages, requests, responses, indications, notifications, signals, or similar, that are described herein.

The communications interface 108 may enable the first entity 100, or components of the first entity 100, to communicate and/or connect in any suitable way. For example, the communications interface 108 may enable the first entity 100, or components of the first entity 100, to communicate and/or connect wirelessly, via a wired connection, or via any other communication (or data transfer) mechanism. In some wireless implementations, for example, the communications interface 108 may enable the first entity 100, or components of the first entity 100, to use radio frequency (RF), Bluetooth, or any other wireless communication technology to communicate and/or connect.

Although the first entity 100 is illustrated in Fig. 1 as comprising a single memory 104, it will be appreciated that the first entity 100 may comprise at least one memory (i.e. a single memory or a plurality of memories) 104 that operate in the manner described herein. Similarly, although the first entity 100 is illustrated in Fig. 1 as comprising a single user interface 106, it will be appreciated that the first entity 100 may comprise at least one user interface (i.e. a single user interface or a plurality of user interfaces) 106 that operate in the manner described herein. Similarly, although the first entity 100 is illustrated in Fig. 1 as comprising a single communications interface 108, it will be appreciated that the first entity 100 may comprise at least one communications interface (i.e. a single communications interface or a plurality of communications interfaces) 108 that operate in the manner described herein. It will also be appreciated that Fig. 1 only shows the components required to illustrate an embodiment of the first entity 100 and, in practical implementations, the first entity 100 may comprise additional or alternative components to those shown.

Fig. 2 illustrates a first method according to an embodiment. The first method is for managing a request for preparation of a beverage. The first entity 100 described earlier with reference to Fig. 1 can be configured to operate in accordance with the first method. For example, the first method can be performed by or under the control of the processing circuitry 102 of the first entity 100. The first method may be a computer-implemented method.

With reference to Fig. 2, at block 110, a first identifier is assigned to the request for preparation of the beverage. More specifically, the first entity 100 (e.g. the processing circuitry 102 of the first entity 100) assigns the first identifier to the request. The request is generated at a UE. The first identifier referred to herein may also be referred to as a beverage identifier ('Beverage ID') or drink identifier ('Drink ID'). The first identifier referred to herein can be generated before preparation of the beverage is initiated. The first identifier referred to herein may be generated by the first entity 100 (e.g. the processing circuitry 102 of the first entity 100). For example, the first identifier referred to herein may be generated by the UE, such as on an application running on the UE, or by an entity of a cloud environment.

At block 112 of Fig. 2, a message is transmitted towards a second entity. More specifically, the first entity 100 (e.g. the processing circuitry 102 of the first entity 100) transmits the first message towards the second entity (e.g. via the communications interface 108 of the first entity 100). The message comprises the first identifier. The first identifier allows the first entity 100 to determine whether or not a status update, generated by a domestic appliance that is to prepare the beverage, corresponds to a status update on the preparation of the beverage.

In some embodiments, the message may additionally comprise one or more of the request, a second identifier that is assigned to the domestic appliance, and a first push notification (PN) token for use in providing a push notification to the user equipment. The second identifier referred to herein may also be referred to as a domestic appliance identifier ('Appliance ID') or machine identifier ('Machine ID').

The second identifier referred to herein may for instance be generated when a user pairs the domestic appliance with their user account. The second identifier referred to herein may be generated by the UE or an entity (e.g. a server) in a cloud environment. For example, the second identifier may be generated on first connection to the cloud environment. Alternatively, the second identifier referred to herein may for instance already be stored on the domestic appliance, e.g. it may have been generated in a factory. In this case, the second identifier referred to herein may be displayed on a user interface of the domestic appliance, e.g. in a machine readable code format such as in the form of a quick response (QR) code. The second identifier referred to herein may then be input into an application on the UE. The first PN token referred to herein may also be referred to as a first PN service token. The first PN token referred to herein may be issued to an application running on the first entity that enables push notifications. The first PN token referred to herein may be issued by an entity, such as a server, in a cloud environment. The first PN token referred to herein may be issued by a service provider of the cloud environment. Herein, the first identifier, the second identifier, and the first PN token are different from each other.

In some embodiments, the first entity 100 can be the user equipment and the second entity can be an entity of a backend architecture. For example, this may be the case where the entity of a backend architecture is acting as a courier and/or in the case of a timed/delayed beverage preparation. Where the entity of a backend architecture is acting as a courier, the message may subsequently be transmitted from the backend architecture towards the domestic appliance. In other embodiments, the first entity 100 can be the user equipment and the second entity can be an entity of a cloud environment. In other embodiments, the first entity 100 can be the user equipment and the second entity can be the domestic appliance. In other embodiments, the first entity 100 can be an entity of a cloud environment and the second entity can be an entity of a backend architecture. In other embodiments, the first entity 100 can be an entity of a cloud environment and the second entity can be the domestic appliance. In other embodiments, the first entity 100 can be an entity of a backend architecture and the second entity can be an entity of a cloud environment. In other embodiments, the first entity 100 can be an entity of a backend architecture and the second entity can be the domestic appliance. In other embodiments, the first entity 100 can be an entity of a first cloud environment and the second entity can be an entity of a second cloud environment. The first cloud environment and the second cloud environment may be provided by the same service provider or a different service provider.

Fig. 3 illustrates a second method according to an embodiment. The second method is for managing a status update on preparation of a beverage. The first entity 100 described earlier with reference to Fig. 1 can be configured to operate in accordance with the second method. For example, the second method can be performed by or under the control of the processing circuitry 102 of the first entity 100. The second method may be a computer-implemented method.

With reference to Fig. 3, at block 114, information is acquired from a third entity. More specifically, the first entity 100 (e.g. the processing circuitry 102 of the first entity 100) acquires the information from the third entity (e.g. via the communications interface 108 of the first entity 100). The information comprises a status update generated by a domestic appliance that is to prepare the beverage and a first identifier assigned to a request for the preparation of the beverage. The request is generated at a UE. The first identifier allows the first entity to determine whether or not the status update generated by the domestic appliance corresponds to a status update on the preparation of the beverage. The first identifier can be assigned to the request by the first entity 100.

In some embodiments, the information may optionally also comprise a second identifier that is assigned to the domestic appliance.

In some embodiments, acquiring the information can comprise receiving the information via a push notification. Alternatively, in some embodiments, acquiring the information can comprise acquiring the information in response to a (pull) request for a status update. For example, acquiring the information can comprise the first entity 100 (e.g. the processing circuitry 102 of the first entity 100) transmitting a (pull) request for a status update to the third entity (e.g. via the communications interface 108 of the first entity 100) and, in response to this request, receiving the information from the third entity (e.g. via the communications interface 108 of the first entity 100). In such a case, no PN token is required. Instead, a status update is pulled from the third entity.

In some embodiments, where the first entity 100 is an entity separate from the UE, the second method may also comprise providing the status update to the UE. Alternatively, in some embodiments, where the first entity 100 is the UE, the second method may also comprise determining whether or not the status update generated by the domestic appliance corresponds to a status update on the preparation of the beverage. This determination can be based on the first identifier.

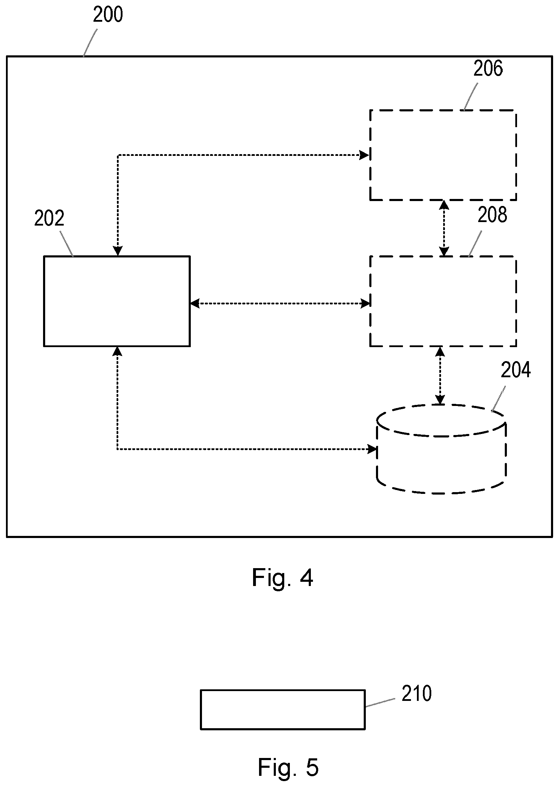

Fig. 4 illustrates the second entity 200 according to an embodiment. The second entity 200 can be for managing a request for preparation of a beverage.

As illustrated in Fig. 4, the second entity 200 comprises processing circuitry (or logic) 202. The processing circuitry 202 controls the operation of the second entity 200 and can implement the method described herein in respect of the second entity 200. The processing circuitry 202 can be configured or programmed to control the second entity 200 in the manner described herein.

The processing circuitry 202 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the second entity 200. In particular implementations, each of the one or more hardware components can be configured to perform, or is for performing, individual or multiple steps of the method described herein in respect of the second entity 200. The processing circuitry 202 can be configured to run software to perform the method described herein in respect of the second entity 200. The processing circuitry 202 can thus be implemented in numerous ways, with software and/or hardware, to perform the various functions described herein in respect of the second entity 200.

Briefly, the processing circuitry 202 of the second entity 200 is configured to receive a message from the first entity 100. The message comprises a first identifier assigned to the request. The request is generated at a UE. The first identifier allows the first entity 100 to determine whether or not a status update, generated by a domestic appliance that is to prepare the beverage, corresponds to a status update on the preparation of the beverage.

As illustrated in Fig. 4, the second entity 200 may optionally comprise a memory 204. Alternatively, the memory 204 may be external to (e.g. separate to or remote from) the second entity 200. The memory 204 may comprise any type of non-transitory machine-readable medium, such as at least one cache or system memory. The memory 204 may comprise a volatile or a non-volatile memory. Examples of the memory 204 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 202 can be communicatively coupled (e.g. connected) to the memory 204. The processing circuitry 202 may be configured to communicate with and/or connect to the memory 204. The memory 204 may be for storing program code or instructions which, when executed by the processing circuitry 202, cause the second entity 200 to operate in the manner described herein. For example, the memory 204 may be configured to store program code or instructions that can be executed by the processing circuitry 202 to cause the second entity 200 to operate in accordance with the method described herein in respect of the second entity 200. Alternatively or in addition, the memory 204 can be configured to store any information, data, messages, requests, responses, indications, notifications, signals, or similar, that are described herein. The processing circuitry 202 may be configured to control the memory 204 to store information, data, messages, requests, responses, indications, notifications, signals, or similar, that are described herein.

As illustrated in Fig. 4, the second entity 200 may optionally comprise a user interface 206. The user interface 206 can be configured to render (or output, display, or provide) information required by or resulting from the method described herein. For example, the user interface 206 may be configured to render (or output, display, or provide) any information, data, messages, requests, responses, indications, notifications, signals, or similar, that are described herein. Alternatively or in addition, the user interface 206 can be configured to receive a user input. For example, the user interface 206 may allow a user to manually enter information or instructions, interact with, and/or control the second entity 200. Thus, the user interface 206 may be a user interface that enables the rendering (or outputting, displaying, or providing) of information and/or that enables a user to provide a user input. For example, the user interface 206 may be configured to enable a user to input a request for the preparation of a beverage.

The user interface 206 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Fig. 4, the second entity 200 may optionally comprise a communications interface (or communications circuitry) 208. The communications interface 208 can be communicatively coupled (e.g. connected) to the processing circuitry 202, the memory 204, and/or the user interface 206. Although the communications interface 208 and the user interface 206 are illustrated as separate interfaces, in other embodiments, the communications interface 208 may be part of the user interface 206. The processing circuitry 202 may be configured to communicate with and/or connect to the communications interface 208. In some embodiments, the processing circuitry 202 can be configured to control the communications interface 208 to operate in the manner described herein. The communications interface 208 can be for enabling the second entity 200, or components of the second entity 200 (e.g. the processing circuitry 202, the memory 204, the user interface 206, and/or any other components of the second entity 200), to communicate with and/or connect to each other and/or one or more other components.

For example, the communications interface 208 may be operable to allow the processing circuitry 202 to communicate with and/or connect to the memory 204 and/or vice versa. Similarly, the communications interface 208 may be operable to allow the processing circuitry 202 to communicate with and/or connect to the user interface 206 and/or vice versa. Similarly, the communications interface 208 may be operable to allow the processing circuitry 202 to communicate with and/or connect to any one or more other entities (e.g. any one or more of the first entity, the third entity, and any other entity) referred to herein. The communications interface 208 can be configured to transmit and/or receive information, data, messages, requests, responses, indications, notifications, signals, or similar, that are described herein. The processing circuitry 202 may be configured to control the communications interface 208 to transmit and/or receive information, data, messages, requests, responses, indications, notifications, signals, or similar, that are described herein.

The communications interface 208 may enable the second entity 200, or components of the second entity 200, to communicate and/or connect in any suitable way. For example, the communications interface 208 may enable the second entity 200, or components of the second entity 200, to communicate and/or connect wirelessly, via a wired connection, or via any other communication (or data transfer) mechanism. In some wireless implementations, for example, the communications interface 208 may enable the second entity 200, or components of the second entity 200, to use radio frequency (RF), Bluetooth, or any other wireless communication technology to communicate and/or connect.

Although the second entity 200 is illustrated in Fig. 4 as comprising a single memory 204, it will be appreciated that the second entity 200 may comprise at least one memory (i.e. a single memory or a plurality of memories) 204 that operate in the manner described herein. Similarly, although the second entity 200 is illustrated in Fig. 4 as comprising a single user interface 206, it will be appreciated that the second entity 200 may comprise at least one user interface (i.e. a single user interface or a plurality of user interfaces) 206 that operate in the manner described herein. Similarly, although the second entity 200 is illustrated in Fig. 4 as comprising a single communications interface 208, it will be appreciated that the second entity 200 may comprise at least one communications interface (i.e. a single communications interface or a plurality of communications interfaces) 208 that operate in the manner described herein. It will also be appreciated that Fig. 4 only shows the components required to illustrate an embodiment of the second entity 200 and, in practical implementations, the second entity 200 may comprise additional or alternative components to those shown.

Fig. 5 illustrates a third method according to an embodiment. The third method is for managing a request for preparation of a beverage. The second entity 200 described earlier with reference to Fig. 4 can be configured to operate in accordance with the third method. For example, the third method can be performed by or under the control of the processing circuitry 202 of the second entity 200. The third method may be a computer-implemented method.

With reference to Fig. 5, at block 210, a message is received from a first entity 100. More specifically, the second entity 200 (e.g. the processing circuitry 202 of the second entity 200) receives the message from the first entity 100 (e.g. via the communications interface 208 of the second entity 200). The message comprises a first identifier assigned to the request. The request is generated at a UE. The first identifier allows the first entity 100 to determine whether or not a status update, generated by a domestic appliance that is to prepare the beverage, corresponds to a status update on the preparation of the beverage. The first identifier can be assigned to the request by the first entity 100.

In some embodiments, the message may optionally also comprise one or more of the request, a second identifier that is assigned to the domestic appliance, and a first PN token for use in providing a push notification to the UE. In some embodiments where the message comprises the first PN token, the third method may also comprise storing the first PN token and the first identifier in a memory. In these embodiments, the first PN token is associated with the first identifier in the memory.

In some embodiments, the first entity 100 can be the user equipment and the second entity 200 can be an entity of a backend architecture. For example, this may be the case where the entity of a backend architecture is acting as a courier and/or in the case of a timed/delayed beverage preparation. Where the entity of a backend architecture is acting as a courier, the message may subsequently be transmitted from the backend architecture towards the domestic appliance. In other embodiments, the first entity 100 can be the user equipment and the second entity 200 can be an entity of a cloud environment. In other embodiments, the first entity 100 can be the user equipment and the second entity 200 can be the domestic appliance. In other embodiments, the first entity 100 can be an entity of a cloud environment and the second entity 200 can be an entity of a backend architecture. In other embodiments, the first entity 100 can be an entity of a cloud environment and the second entity 200 can be the domestic appliance. In other embodiments, the first entity 100 can be an entity of a backend architecture and the second entity 200 can be an entity of a cloud environment. In other embodiments, the first entity 100 can be an entity of a backend architecture and the second entity 200 can be the domestic appliance. In other embodiments, the first entity 100 can be an entity of a first cloud environment and the second entity 200 can be an entity of a second cloud environment. The first cloud environment and the second cloud environment may be provided by the same service provider or a different service provider.

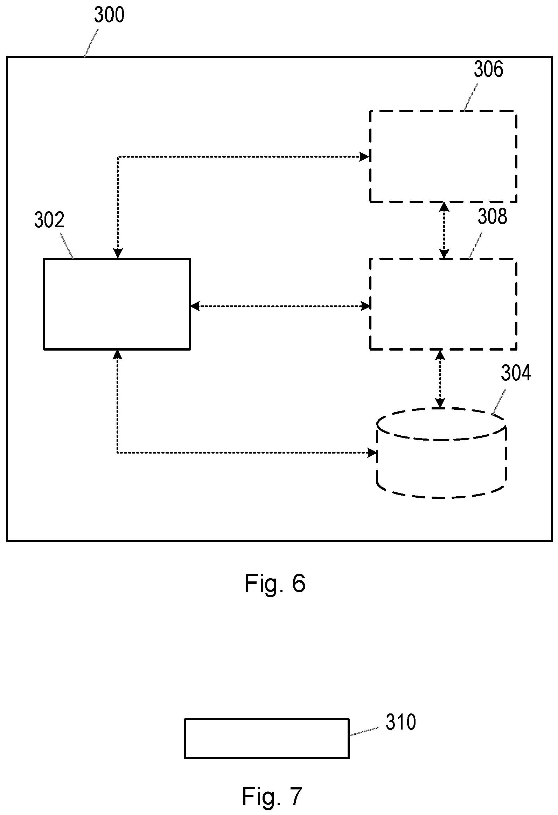

Fig. 6 illustrates the third entity 300 according to an embodiment. The third entity 300 can be for managing a status update on preparation of a beverage.

As illustrated in Fig. 6, the third entity 300 comprises processing circuitry (or logic) 302. The processing circuitry 302 controls the operation of the third entity 300 and can implement the method described herein in respect of the third entity 300. The processing circuitry 302 can be configured or programmed to control the third entity 300 in the manner described herein.

The processing circuitry 302 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the third entity 300. In particular implementations, each of the one or more hardware components can be configured to perform, or is for performing, individual or multiple steps of the method described herein in respect of the third entity 300. The processing circuitry 302 can be configured to run software to perform the method described herein in respect of the third entity 300. The processing circuitry 302 can thus be implemented in numerous ways, with software and/or hardware, to perform the various functions described herein in respect of the third entity 300.

Briefly, the processing circuitry 302 of the third entity 300 is configured to provide information to the first entity 100. The information comprises a status update generated by a domestic appliance that is to prepare the beverage and a first identifier assigned to a request for the preparation of the beverage. The request is generated at a UE. The first identifier allows the first entity 100 to determine whether or not the status update generated by the domestic appliance corresponds to a status update on the preparation of the beverage.

As illustrated in Fig. 6, the third entity 300 may optionally comprise a memory 304. Alternatively, the memory 304 may be external to (e.g. separate to or remote from) the third entity 300. The memory 304 may comprise any type of non-transitory machine-readable medium, such as at least one cache or system memory. The memory 304 may comprise a volatile or a non-volatile memory. Examples of the memory 304 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 302 can be communicatively coupled (e.g. connected) to the memory 304. The processing circuitry 302 may be configured to communicate with and/or connect to the memory 304. The memory 304 may be for storing program code or instructions which, when executed by the processing circuitry 302, cause the third entity 300 to operate in the manner described herein. For example, the memory 304 may be configured to store program code or instructions that can be executed by the processing circuitry 302 to cause the third entity 300 to operate in accordance with the method described herein in respect of the third entity 300. Alternatively or in addition, the memory 304 can be configured to store any information, data, messages, requests, responses, indications, notifications, signals, or similar, that are described herein. The processing circuitry 302 may be configured to control the memory 304 to store information, data, messages, requests, responses, indications, notifications, signals, or similar, that are described herein.

As illustrated in Fig. 6, the third entity 300 may optionally comprise a user interface 306. The user interface 306 can be configured to render (or output, display, or provide) information required by or resulting from the method described herein. For example, the user interface 306 may be configured to render (or output, display, or provide) any information, data, messages, requests, responses, indications, notifications, signals, or similar, that are described herein. Alternatively or in addition, the user interface 306 can be configured to receive a user input. For example, the user interface 306 may allow a user to manually enter information or instructions, interact with, and/or control the third entity 300. Thus, the user interface 306 may be a user interface that enables the rendering (or outputting, displaying, or providing) of information and/or that enables a user to provide a user input. For example, the user interface 306 may be configured to enable a user to input a request for the preparation of a beverage.

The user interface 306 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Fig. 6, the third entity 300 may optionally comprise a communications interface (or communications circuitry) 308. The communications interface 308 can be communicatively coupled (e.g. connected) to the processing circuitry 302, the memory 304, and/or the user interface 306. Although the communications interface 308 and the user interface 306 are illustrated as separate interfaces, in other embodiments, the communications interface 308 may be part of the user interface 306. The processing circuitry 302 may be configured to communicate with and/or connect to the communications interface 308. In some embodiments, the processing circuitry 302 can be configured to control the communications interface 308 to operate in the manner described herein. The communications interface 308 can be for enabling the third entity 300, or components of the third entity 300 (e.g. the processing circuitry 302, the memory 304, the user interface 306, and/or any other components of the third entity 300), to communicate with and/or connect to each other and/or one or more other components.

For example, the communications interface 308 may be operable to allow the processing circuitry 302 to communicate with and/or connect to the memory 304 and/or vice versa. Similarly, the communications interface 308 may be operable to allow the processing circuitry 302 to communicate with and/or connect to the user interface 306 and/or vice versa. Similarly, the communications interface 308 may be operable to allow the processing circuitry 302 to communicate with and/or connect to any one or more other entities (e.g. any one or more of the first entity, the second entity, and any other entity) referred to herein. The communications interface 308 can be configured to transmit and/or receive information, data, messages, requests, responses, indications, notifications, signals, or similar, that are described herein. The processing circuitry 302 may be configured to control the communications interface 308 to transmit and/or receive information, data, messages, requests, responses, indications, notifications, signals, or similar, that are described herein.

The communications interface 308 may enable the third entity 300, or components of the third entity 300, to communicate and/or connect in any suitable way. For example, the communications interface 308 may enable the third entity 300, or components of the third entity 300, to communicate and/or connect wirelessly, via a wired connection, or via any other communication (or data transfer) mechanism. In some wireless implementations, for example, the communications interface 308 may enable the third entity 300, or components of the third entity 300, to use radio frequency (RF), Bluetooth, or any other wireless communication technology to communicate and/or connect.

Although the third entity 300 is illustrated in Fig. 6 as comprising a single memory 304, it will be appreciated that the third entity 300 may comprise at least one memory (i.e. a single memory or a plurality of memories) 304 that operate in the manner described herein. Similarly, although the third entity 300 is illustrated in Fig. 6 as comprising a single user interface 306, it will be appreciated that the third entity 300 may comprise at least one user interface (i.e. a single user interface or a plurality of user interfaces) 306 that operate in the manner described herein. Similarly, although the third entity 300 is illustrated in Fig. 6 as comprising a single communications interface 308, it will be appreciated that the third entity 300 may comprise at least one communications interface (i.e. a single communications interface or a plurality of communications interfaces) 308 that operate in the manner described herein. It will also be appreciated that Fig. 6 only shows the components required to illustrate an embodiment of the third entity 300 and, in practical implementations, the third entity 300 may comprise additional or alternative components to those shown.

Fig. 7 illustrates a fourth method according to an embodiment. The fourth method is for managing a status update on preparation of a beverage. The third entity 300 described earlier with reference to Fig. 6 can be configured to operate in accordance with the fourth method. For example, the fourth method can be performed by or under the control of the processing circuitry 302 of the third entity 300. The fourth method may be a computer-implemented method.

With reference to Fig. 7, at block 310, information is provided to a first entity 100. More specifically, the third entity 300 (e.g. the processing circuitry 302 of the first entity 100) provides the information to the first entity 100 (e.g. via the communications interface 308 of the third entity 300). The information comprises a status update generated by a domestic appliance that is to prepare the beverage and a first identifier assigned to a request for the preparation of the beverage. The request is generated at a UE. The first identifier allows the first entity 100 to determine whether or not the status update generated by the domestic appliance corresponds to a status update on the preparation of the beverage. The first identifier can be assigned to the request by the first entity 100.

In some embodiments, the information may optionally also comprise a second identifier that is assigned to the domestic appliance.

In some embodiments, providing the information may comprise providing the information in response to a (pull) request for a status update. The request for a status update may be received from the first entity 100 by the third entity 300 (e.g. via the communications interface 308 of the third entity 300). The information may be provided in response to the request for a status update by the third entity 300 (e.g. the processing circuitry 302 of the first entity 300) transmitting the information towards the first entity 100 (e.g. via the communications interface 308 of the third entity 300). In such a case, no PN token is required. Instead, the first entity 100 pulls a status update from the third entity 300.

Alternatively, in some embodiments, providing the information may comprise transmitting the information via a push notification. In some of these embodiments, the fourth method may comprise determining a first PN token from one or more push notifications stored in a memory and transmitting the information via the push notification using the determined first PN token. The first PN token can be associated with the first identifier in the memory.

In some embodiments, the third entity 300 can be an entity of a backend architecture and the first entity 100 can be the user equipment. In other embodiments, the third entity 300 can be an entity of a cloud environment and the first entity 100 can be the user equipment. In other embodiments, the third entity 300 can be the domestic appliance and the first entity 100 can be the user equipment. In other embodiments, the third entity 300 can be an entity of a backend architecture and the first entity 100 can be an entity of a cloud environment. In other embodiments, the third entity 300 can be the domestic appliance and the first entity 100 can be an entity of a cloud environment. In other embodiments, the third entity 300 can be an entity of a cloud environment and the first entity 100 can be an entity of a backend architecture. In other embodiments, the third entity 300 can be the domestic appliance and the first entity 100 can be an entity of a backend architecture. In other embodiments, the third entity 300 can be an entity of a first cloud environment and the first entity 100 can be an entity of a second cloud environment. The first cloud environment and the second cloud environment may be provided by the same service provider or a different service provider.

In some embodiments, the first identifier referred to herein can be a numerical value. For example, the first identifier referred to herein may be a numerical (e.g. integer) value randomly selected from a range of numerical (e.g. integer) values. The range of numerical values may, for example, be from 0 to 32 billion. In some of these embodiments, the first identifier referred to herein may be a numerical value randomly selected from a first (e.g. lower) half of the range (e.g. 0 to 16 billion) to indicate that the UE is to receive push notifications or the first identifier referred to herein may be a numerical value randomly selected from a second (e.g. upper) half of the range (e.g. 17 billion to 32 billion) to indicate that the user equipment is not to receive push notifications. Thus, the first identifier can additionally be used to indicate whether or not a user wants push notifications. It can be indicated whether or not a user wants push notifications in an application setting on the UE, and/or in a user account or user profile of the user that is accessible to the first entity 100. The first identifier can then be selected accordingly.

The first identifier referred to herein can be different from another first identifier assigned to a request, generated at another UE, for preparation of another beverage to be prepared by the same appliance. Thus, in the case of multiple requests for preparation of a beverage, each request can be assigned a different identifier. In this way, collisions can be avoided as the requests can be distinguished from one another.

In some embodiments, the status update referred to herein may comprise an indication that the preparation of the beverage is complete. Alternatively, in some embodiments, the status update referred to herein may comprise any one or more of a progress status (e.g. an indication that the preparation of the beverage is partially complete or a percentage of the beverage that has been prepared), information on the position of the beverage in a queue of beverages that are to be prepared by the domestic appliance, and information indicative that an issue with the domestic appliance is preventing the completion of the preparation of the beverage. The issue with the domestic appliance can be, for example, that the domestic appliance is out of ingredients for the beverage (e.g. coffee, milk, water, fruit, CO2, etc.), has an electrical fault, and/or any other issue with the domestic appliance.

There is also provided a system. The system can comprise any one or more of the first entity 100 described herein, the second entity 200 described herein, and the third entity 300 described herein. A method performed by a system can comprise any one or more of the first method described herein with respect to the first entity 100, the second method described herein with respect to the first entity 100, the third method described herein with respect to the second entity 200, and the fourth method described herein with respect to the third entity 300.

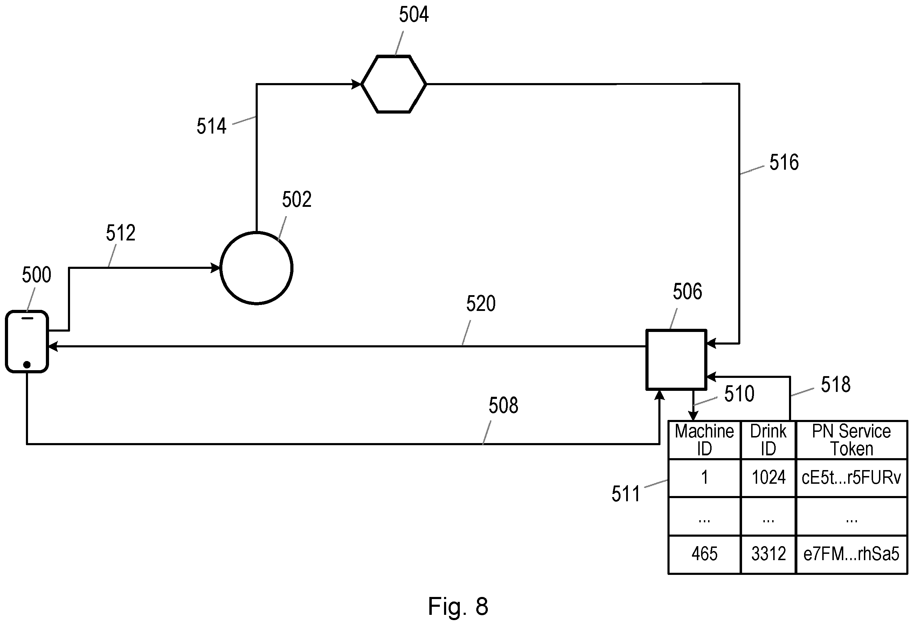

Fig. 8 illustrates a system according to an embodiment. The system illustrated in Fig. 8 comprises a UE 500, a domestic appliance 502, a cloud environment 504, and a backend architecture 506. The cloud environment 504 can be an Internet of Things (IoT) cloud environment. The cloud environment 504 can comprise one or more entities (not illustrated in Fig. 8), such as a gateway (e.g. an IoT gateway) or server. The backend architecture 506 can comprise one or more entities (not illustrated in Fig. 8), such as one or both of an application programming interface (API) platform and a PN service.

In the system illustrated in Fig. 8, the UE 500 operates as the first entity 100 as described earlier with reference to Figs. 1, 2 and 3, the domestic appliance 502 and an entity (e.g. the gateway/server) of the cloud environment 504 each operate as the second entity 200 as described earlier with reference to Figs. 4 and 5, and an entity (e.g. the PN service) of the backend architecture 506 operates as the third entity 300 as described earlier with reference to Figs. 6 and 7.

An application (or 'app') is started on the UE 500. The application is thus running on the UE 500. A user logs into the application. The logged in user requests, via the application, preparation of a beverage. Thus, a request for preparation of a beverage is generated at the UE 500. As illustrated by arrow 508 of Fig. 8, the UE 500 transmits a first message towards an entity (e.g. the API platform) of the backend architecture 506. The entity (e.g. the API platform) of the backend architecture 506 receives the first message from the UE 500. The first message comprises a first identifier assigned to the request for the preparation of the beverage. The first message can also optionally comprise one or both of a second identifier and a first PN token for use in providing a push notification to the UE 500. The second identifier is an identifier that is assigned to the domestic appliance 502 that is to prepare the beverage. The first PN token can be a PN token that the entity (e.g. the API platform) of the backend architecture 506 has previously registered for the logged in user.

The parameters from the first message can thus be registered. In more detail, as illustrated by arrow 510 of Fig. 8, an entity (e.g. the API platform) of the backend architecture 506 can store the first identifier in a memory 511. The memory 511 can be a memory 304 of an entity of the backend architecture 506 or another memory. Where the first message comprises the first PN token, the entity (e.g. the API platform) of the backend architecture 506 can store the first PN token and the first identifier in the memory 511. In this case, the first PN token is associated with the first identifier in the memory 511. Where the first message also comprises the second identifier, the entity (e.g. the API platform) of the backend architecture 506 can store the first PN token, the first identifier, and the second identifier in the memory 511. In this case, the first PN token can be associated with the first identifier and optionally also the second identifier in the memory 511. The memory 511 may store one or more PN tokens with associated Beverage IDs and optionally also associated Appliance IDs, e.g. PN token 'cE5t...r5FURv' associated with Beverage ID '1024' and optionally also associated with Appliance ID '1', and PN token 'e7FM...rhSa5' associated with Beverage ID '3312' and optionally also associated with Appliance ID '465', etc.

As illustrated by arrow 512 of Fig. 8, the UE 500 transmits a second message towards the domestic appliance 502 that is to prepare the beverage. The domestic appliance 502 receives the second message from the UE 500. The second message comprises the first identifier assigned to the request for the preparation of the beverage. The second message also comprises a request for preparation of the beverage and optionally also the second identifier assigned to the domestic appliance 502 that is to prepare the beverage. The second message can initiate the preparation of the beverage on the domestic appliance 502. As the second message comprises the first identifier, the second message does not need to include and, in fact, does not include the PN token. The second message does not include any information that identifies the user, that is traceable back to the user, or that is private.

As illustrated by arrow 514 of Fig. 8, the domestic appliance 502 provides information to an entity (e.g. the gateway/server) of the cloud environment 504. The entity (e.g. the gateway/server) of the cloud environment 504 thus acquires information from the domestic appliance 502. In more detail, as illustrated by arrow 514 of Fig. 8, the domestic appliance 502 transmits (e.g. a third message comprising) the information towards the entity (e.g. the gateway/server) of the cloud environment 504. The entity (e.g. the gateway/server) of the cloud environment 504 receives (e.g. a third message comprising) the information from the domestic appliance 502. In this way, the information can be uploaded to the entity (e.g. the gateway/server) of the cloud environment 504. The information comprises a status update generated by the domestic appliance 502 that is to prepare the beverage and the first identifier assigned to the request for the preparation of the beverage. The status update generated by the domestic appliance 502 may or may not correspond to the request for the preparation of the beverage.

The information can optionally also comprise the second identifier assigned to the domestic appliance 502 that is to prepare the beverage. Thus, the information is notified to the entity (e.g. the gateway/server) of the cloud environment 504. As the information comprises the first identifier, the information does not need to include and, in fact, does not include the PN token. The information does not include any information that identifies the user, that is traceable back to the user, or that is private.

As illustrated by arrow 516 of Fig. 8, an entity (e.g. the API platform) of the backend architecture 506 acquires the information from the entity (e.g. the gateway/server) of the cloud environment 504. The entity (e.g. the gateway/server) of the cloud environment 504 provides the information to the entity (e.g. the API platform) of the backend architecture 506. The entity (e.g. the API platform) of the backend architecture 506 can be responsible for processing events from the entity (e.g. the gateway/server) of the cloud environment 504. The entity (e.g. the API platform) of the backend architecture 506 may provide the information to another entity (e.g. the PN service) of the backend architecture 506. As mentioned earlier, as the information comprises the first identifier, the information does not need to include and, in fact, does not include the PN token. The information does not include any information that identifies the user, that is traceable back to the user, or that is private.

As illustrated by arrow 520 of Fig. 8, an entity (e.g. the PN service) of the backend architecture 506 provides the information to the UE 500. Thus, the UE 500 acquires the information from the entity (e.g. the PN service) of the backend architecture 506. In more detail, the entity (e.g. the PN service) of the backend architecture 506 provides the information to the UE 500 by transmitting the information to the UE 500 via a push notification. Thus, the UE 500 acquires the information from the entity (e.g. the PN service) of the backend architecture 506 by receiving the information via the push notification. That is, the push notification can be sent to the target entity (i.e. the UE 500 or, more specifically, the application running on the UE 500) at which the request for preparation of the beverage was generated and/or that initiated the preparation of the beverage.

The entity (e.g. the PN service) of the backend architecture 506 can transmit the information via the push notification using the first PN token. In more detail, as illustrated by arrow 518 of Fig. 8, the entity (e.g. the PN service) of the backend architecture 506 can determine the first PN token from one or more PN tokens stored in the memory 511. As mentioned earlier, the first PN token is associated with the first identifier in the memory 511 and can optionally also be associated with the second identifier in the memory 511. Thus, the entity (e.g. the PN service) of the backend architecture 506 is able to use the first identifier and optionally also the second identifier to determine which of the one or more PN tokens stored in the memory 511 is the first PN token. More specifically, based on the first identifier and optionally also the second identifier, the entity (e.g. the PN service) of the backend architecture 506 can determine the first PN token that is used to push a notification on the target entity (the UE 500) at which the request for preparation of the beverage was generated and/or that initiated the preparation of the beverage.

Therefore, the UE 500 acquires the information from the backend architecture 506. As mentioned earlier, the information comprises a status update generated by the domestic appliance 502 that is to prepare the beverage and the first identifier assigned to the request for the preparation of the beverage. The information can optionally also comprise the second identifier assigned to the domestic appliance 502 that is to prepare the beverage. As also mentioned earlier, the status update generated by the domestic appliance 502 may or may not correspond to the request for the preparation of the beverage. However, the first identifier allows the UE 500 to determine whether or not the status update generated by the domestic appliance 502 corresponds to a status update on the preparation of the beverage.

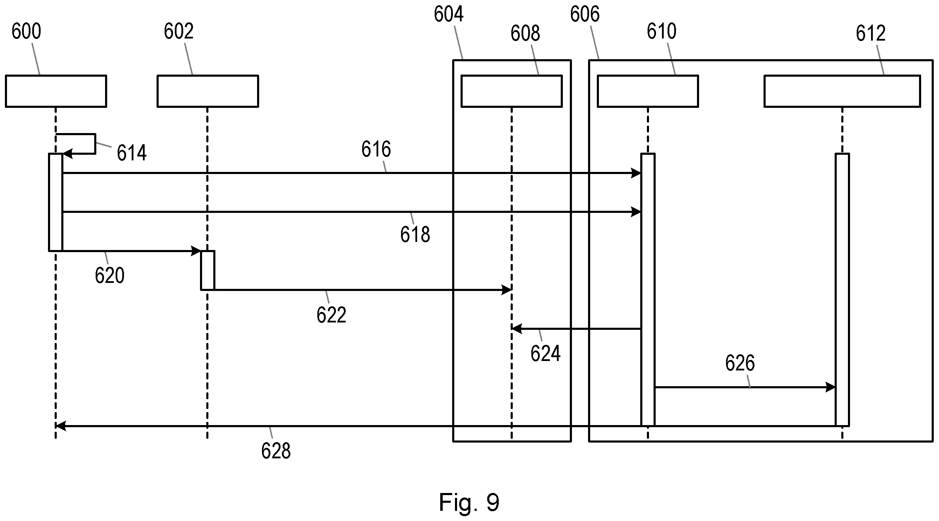

Fig. 9 is a signalling diagram illustrating an exchange of signals in a system according to an embodiment. In more detail, Fig. 9 illustrates an exchange of signals in a system for managing a request for preparation of a beverage and for managing a status update on preparation of a beverage. The system illustrated in Fig. 9 comprises a UE 600, a domestic appliance 602, a cloud environment 604, and a backend architecture 606. The cloud environment 604 can be an Internet of Things (IoT) cloud environment. The cloud environment 604 can comprise one or more entities, such as a gateway (e.g. an IoT gateway) or server 608. The backend architecture 606 can comprise one or more entities, such as one or both of an application programming interface (API) platform 610 and a PN service 612.

In the system illustrated in Fig. 9, the UE 600 operates as the first entity 100 as described earlier with reference to Figs. 1, 2 and 3, the domestic appliance 602 and an entity (e.g. the gateway/server 608) of the cloud environment 604 each operate as the second entity 200 as described earlier with reference to Figs. 4 and 5, and an entity (e.g. the PN service 612) of the backend architecture 606 operates as the third entity 300 as described earlier with reference to Figs. 6 and 7.

As illustrated by arrow 614 of Fig. 9, an application (or 'app') is started on the UE 600. The application is thus running on the UE 600. A user logs into the application. The logged in user requests, via the application, preparation of a beverage. Thus, a request for preparation of a beverage is generated at the UE 600. As illustrated by arrow 616 of Fig. 9, the UE 600 may transmit a first message towards an entity (e.g. the API platform 610) of the backend architecture 606. The entity (e.g. the API platform 610) of the backend architecture 606 receives the first message from the UE 600. The first message comprises a request to register a first PN token for the logged in user. The entity (e.g. the API platform 610) of the backend architecture 606 thus registers the first PN token. The first PN token is for use in providing a push notification to the UE 600.

As illustrated by arrow 618 of Fig. 9, the UE 600 transmits a second message towards an entity (e.g. the API platform 610) of the backend architecture 606. The entity (e.g. the API platform 610) of the backend architecture 606 receives the second message from the UE 600. The second message comprises the first identifier assigned to the request for the preparation of the beverage. The second message can also optionally comprise one or both of a second identifier and the first PN token. The second identifier is an identifier that is assigned to the domestic appliance 602 that is to prepare the beverage.

An entity (e.g. the API platform 610) of the backend architecture 606 can store the first identifier in a memory. The memory can be a memory 304 of an entity of the backend architecture 506 or another memory. Where the second message comprises the first PN token, the entity (e.g. the API platform 610) of the backend architecture 606 can store the first PN token and the first identifier in the memory. In this case, the first PN token is associated with the first identifier in the memory. Where the second message also comprises the second identifier, the entity (e.g. the API platform 610) of the backend architecture 606 can store the first PN token, the first identifier, and the second identifier in the memory. In this case, the first PN token can be associated with the first identifier and optionally also the second identifier in the memory.

As illustrated by arrow 620 of Fig. 9, the UE 600 transmits a third message towards the domestic appliance 602 that is to prepare the beverage. The domestic appliance 602 receives the third message from the UE 600. The third message comprises the first identifier assigned to the request for the preparation of the beverage. The third message also comprises a request for preparation of the beverage and optionally also the second identifier assigned to the domestic appliance 602 that is to prepare the beverage. The third message can initiate the preparation of the beverage.

As illustrated by arrow 622 of Fig. 9, the domestic appliance 602 provides information to an entity (e.g. the gateway/server 608) of the cloud environment 604. The entity (e.g. the gateway/server 608) of the cloud environment 604 thus acquires information from the domestic appliance 602. In more detail, as illustrated by arrow 622 of Fig. 9, the domestic appliance 602 transmits (e.g. a fourth message comprising) the information towards the entity (e.g. the gateway/server 608) of the cloud environment 604. The entity (e.g. the gateway/server 608) of the cloud environment 604 receives (e.g. a fourth message comprising) the information from the domestic appliance 602. In this way, the information can be uploaded to the entity (e.g. the gateway/server 608) of the cloud environment 604. The information comprises a status update generated by the domestic appliance 602 that is to prepare the beverage and the first identifier assigned to the request for the preparation of the beverage. The status update generated by the domestic appliance 602 may or may not correspond to the request for the preparation of the beverage. The information can optionally also comprise the second identifier assigned to the domestic appliance 602 that is to prepare the beverage.

As illustrated by arrow 624 of Fig. 9, an entity (e.g. the API platform 610) of the backend architecture 606 acquires the information from the entity (e.g. the gateway/server 608) of the cloud environment 604. The entity (e.g. the gateway/server 608) of the cloud environment 604 provides the information to the entity (e.g. the API platform 610) of the backend architecture 606. Thus, event data is retrieved by the entity (e.g. the API platform 610) of the backend architecture 606 from the entity (e.g. the gateway/server 608) of the cloud environment 604. As illustrated by arrow 626 of Fig. 9, the entity (e.g. the API platform 610) of the backend architecture 606 provides the information to another entity (e.g. the PN service 612) of the backend architecture 606.

As illustrated by arrow 628 of Fig. 9, an entity (e.g. the PN service 612) of the backend architecture 606 provides the information to the UE 600. Thus, the UE 600 acquires the information from the entity (e.g. the PN service 612) of the backend architecture 606. In more detail, the entity (e.g. the PN service 612) of the backend architecture 606 provides the information to the UE 600 by transmitting the information to the UE 600 via a push notification. Thus, the UE 600 acquires the information from the entity (e.g. the PN service 612) of the backend architecture 606 by receiving the information via the push notification.

The entity (e.g. the PN service 612) of the backend architecture 606 can transmit the information via the push notification using the first PN token. In more detail, the entity (e.g. the PN service 612) of the backend architecture 606 can determine the first PN token from one or more PN tokens stored in the memory. As mentioned earlier, the first PN token is associated with the first identifier in the memory and can optionally also be associated with the second identifier in the memory. Thus, the entity (e.g. the PN service 612) of the backend architecture 606 is able to use the first identifier and optionally also the second identifier to determine which of the one or more PN tokens stored in the memory is the first PN token.

Therefore, the UE 600 acquires the information from the backend architecture 606. As mentioned earlier, the information comprises a status update generated by the domestic appliance 602 that is to prepare the beverage and the first identifier assigned to the request for the preparation of the beverage. The information can optionally also comprise the second identifier assigned to the domestic appliance 602 that is to prepare the beverage. As also mentioned earlier, the status update generated by the domestic appliance 602 may or may not correspond to the request for the preparation of the beverage. However, the first identifier allows the UE 600 to determine whether or not the status update generated by the domestic appliance 602 corresponds to a status update on the preparation of the beverage.

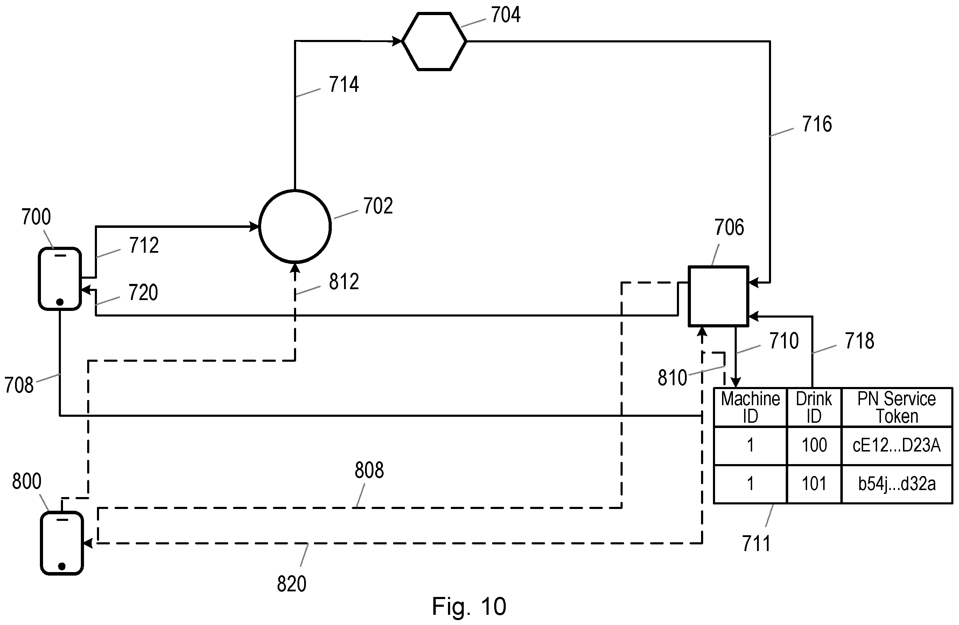

Fig. 10 illustrates a system according to an embodiment. The system illustrated in Fig. 10 comprises a first UE 700, a second UE 800, a domestic appliance 702, a cloud environment 704, and a backend architecture 706. Fig. 10 illustrates a situation in which a request for preparation of a beverage is generated at multiple UEs 700, 800 at the same time or at a similar time (i.e. at nearly the same time). A similar time can be, for example, within a time period that is less than a time it takes the domestic appliance 702 to prepare a beverage.

In the system illustrated in Fig. 10, the UE 700 operates as the first entity 100 as described earlier with reference to Figs. 1, 2 and 3, the UE 800 also operates as the first entity 100 as described earlier with reference to Figs. 1, 2 and 3, the domestic appliance 702 and an entity (e.g. the gateway/server) of the cloud environment 704 each operate as the second entity 200 as described earlier with reference to Figs. 4 and 5, and an entity (e.g. the PN service) of the backend architecture 706 operates as the third entity 300 as described earlier with reference to Figs. 6 and 7. The first UE 700, cloud environment 704, and backend architecture 706 of the system illustrated in Fig. 10 are as described earlier with refence to the UE 500, cloud environment 504, and backend architecture 506 respectively of the system illustrated in Fig. 8. Thus, the process illustrated by arrows 708, 710, 712, 714, 716, 718, 720 in Fig. 10 are as described earlier with reference to the process illustrated by arrows 508, 510, 512, 514, 516, 518, 520 in Fig. 8. The second UE 800 of the system illustrated in Fig. 10 is also as described earlier with refence to the UE 500 of the system illustrated in Fig. 8. Thus, the process illustrated by arrows 808, 810, 812, 820 in Fig. 10 are as described earlier with reference to the process illustrated by arrows 508, 510, 512, 520 in Fig. 8. The memory 711 of the system illustrated in Fig. 10 is as described earlier with refence to the memory 511 of the system illustrated in Fig. 8.

Thus, in the system illustrated in Fig. 10, a request for preparation of a first beverage is generated at the first UE 700 and a request for preparation of a second beverage is generated at the second UE 800 at the same or a similar time. Both the first and second beverages are to be prepared by the same appliance 702. This means that the two UEs 700, 800 (or the applications running on the two UEs 700, 800) interact with the same appliance at the same or a similar time. Whereas the first UE 700 assigns a first identifier to the request for preparation of the first beverage, the second UE 800 assigns another first identifier to the request for preparation of the second beverage. The first identifier is different from this other first identifier. Thus, the two requests have different identifiers assigned to them by different UEs 700, 800. The second identifier assigned to the domestic appliance 702 can be different from both the first identifier and the other first identifier. Each UE 700, 800 (or each application) can initiate a remote beverage preparation process with a different Beverage ID. Also, a push notification can be received by the UE 700, 800 (or application) that initiates the process without using any kind of user identifiable data in the flow.

As an example, the first identifier assigned by the first UE 700 to the request for the preparation of the first beverage may be a value of '100', whereas the other first identifier assigned by the second UE 800 to the request for the preparation of the second beverage may be a value of '101'. The second identifier assigned to the domestic appliance 702 may be a value of '1'. A first PN token is for use in providing a push notification to the first UE 700. The first PN token may be 'cE12...D23A'. A second PN token is for use in providing a push notification to the second UE 800. The second PN token may be 'b54j...d32a'.

In this example, the first message from the first UE 700 to an entity (e.g. the API platform) of the backend architecture 706, as illustrated by arrow 708 of Fig. 10, comprises the first identifier as 'Beverage ID = 100' and optionally also one or both of the second identifier as 'Appliance ID = 1' and the first PN token as 'PN Token = cE12...D23A'. In contrast, the first message from the second UE 800 to the entity (e.g. the API platform) of the backend architecture 706, as illustrated by arrow 808 of Fig. 10, comprises the other first identifier as 'Beverage ID = 101' and optionally also one or both of the second identifier as 'Appliance ID = 1' and the second PN token as 'PN Token = b54j...d32a'.

These parameters are registered. More specifically, at arrow 710 of Fig. 10, an entity (e.g. the API platform) of the backend architecture 706 stores these parameters in the memory 711. As illustrated in Fig. 10, in the memory 711, the first PN token 'cE12...D23A' can be associated with the first identifier '100' and optionally also the second identifier '1', whereas the second PN token 'b54j...d32a' can be associated with the other first identifier '101' and optionally also the second identifier '1'.

The second message from the first UE 700 to the domestic appliance 702, as illustrated by arrow 712 of Fig. 10, comprises the first identifier as 'Beverage ID = 100', the request for preparation of the first beverage, and optionally also the second identifier as 'Appliance ID = 1'. In contrast, the second message from the second UE 800 to the domestic appliance 702, as illustrated by arrow 812 of Fig. 10, comprises the other first identifier as 'Beverage ID = 101', the request for preparation of the second beverage, and optionally also the second identifier as 'Appliance ID = 1'.

The information from the domestic appliance 702 to an entity (e.g. the gateway/server) of the cloud environment 704, as illustrated by arrow 714 of Fig. 10, comprises a status update generated by the domestic appliance 702 together with the first identifier as 'Beverage ID = 100' and optionally also the second identifier as 'Appliance ID = 1'. The information from the domestic appliance 702 to the entity (e.g. the gateway/server) of the cloud environment 704, as illustrated by arrow 714 of Fig. 10, also comprises the status update generated by the domestic appliance 702 together with the other first identifier as 'Beverage ID = 101' and optionally also the second identifier as 'Appliance ID = 1'.

The information from the entity (e.g. the gateway/server) of the cloud environment 704 to an entity (e.g. the API platform) of the backend architecture 706, as illustrated by arrow 716 of Fig. 10, comprises the status update generated by the domestic appliance 702 together with the first identifier as 'Beverage ID = 100' and optionally also the second identifier as 'Appliance ID = 1'. The information from the entity (e.g. the gateway/server) of the cloud environment 704 to the entity (e.g. the API platform) of the backend architecture 706, as illustrated by arrow 716 of Fig. 10, also comprises the status update generated by the domestic appliance 702 together with the other first identifier as 'Beverage ID = 101' and optionally also the second identifier as 'Appliance ID = 1'.

At arrow 718 of Fig. 10, the entity (e.g. the PN service) of the backend architecture 706 determines that the first PN token 'cE12...D23A' is associated with the first identifier 'Beverage ID = 100' in the memory 711. At arrow 718 of Fig. 10, the entity (e.g. the PN service) of the backend architecture 706 also determines that the second PN token as 'b54j...d32a' is associated with the other first identifier 'Beverage ID = 101' in the memory 711.

Thus, at arrow 720 of Fig. 10, the information from an entity (e.g. the PN service) of the backend architecture 706 to the first UE 700 is transmitted via a push notification using the first PN token 'cE12...D23A' and the information comprises the status update generated by the domestic appliance 702, the first identifier as 'Beverage ID = 100', and optionally also the second identifier as 'Appliance ID = 1'. In contrast, at arrow 820 of Fig. 10, the information from the entity (e.g. the PN service) of the backend architecture 706 to the second UE 800 is transmitted via a push notification using the second PN token 'b54j...d32a' and the information comprises the status update generated by the domestic appliance 702, the other first identifier as 'Beverage ID = 101', and optionally also the second identifier as 'Appliance ID = 1'.

The first identifier '100' allows the first UE 700 to determine whether or not the status update generated by the domestic appliance 702 corresponds to a status update on the preparation of the first beverage, whereas the other first identifier `101' allows the second UE 800 to determine whether or not the status update generated by the domestic appliance 702 corresponds to a status update on the preparation of the second beverage. However, it is optional that the first UE 700 and/or second UE 800 actually make such a determination.

In more detail, in some embodiments, such as those where the first UE acquires a status update generated by the domestic appliance in response to a pull request, the first UE may perform the step of actually determining whether or not the status update corresponds to a status update on the preparation of the first beverage. In this way, the first UE can determine whether or not the status update is intended for the first UE. In other embodiments, such as those where the first UE 500, 600, 700 receives a status update generated by the domestic appliance 502, 602, 702 via a push notification (as illustrated by steps 520, 628 and 720 in Figs. 8, 9 and 10 respectively), the first UE 500, 600, 700 may not perform the step of actually determining whether or not the status update corresponds to a status update on the preparation of the first beverage. Instead, in these embodiments, an entity (e.g. the PN service) of the backend architecture 506, 606, 706 can determine for which UE a status update is intended (e.g. via the information stored in the memory 511, 711, which links first identifiers to corresponding PN tokens). As such, it is not necessary for the first UE 500, 600, 700 to check whether or not the information it receives via the push notification comprises the first identifier. However, the first UE 500, 600, 700 may optionally perform this check. The same ideas equally apply in respect of the second UE 800.

The techniques described herein thus enable a notification to be sent only to the entity or entities at which a request for preparation of a beverage is generated and/or that initiated preparation of the beverage. This can be particularly beneficial in situations (e.g. a household or office) where multiple users use the same account linked to the domestic appliance as, in these situations, the users have only one user identifier ('User ID'), even though they may be using different UEs. Advantageously, by way of the techniques described herein, the owner of the account will not be notified of a status update that corresponds to the preparation of a beverage requested by another user. The techniques described herein can also advantageously avoid collisions in situations where multiple users initiate preparation of a beverage at the same time or at almost the same time. This is all made possible by linking the request for preparation of a beverage to a first identifier.

The are many use cases to which the techniques described herein can be applied. Some examples of such use cases will now be described. However, it will be understood that other use cases are also possible.

In one example use case, the domestic appliance is a fully automatic espresso coffee machine or a bean to cup coffee machine, with integrated grinder. With these machines, a user needs to fill the bean container with coffee beans and select a recipe (e.g. cappuccino, latte, americano, ristretto, lungo, espresso, flat white, etc). The machine then does the rest. In particular, the machine doses the proper amount of coffee beans into the grinder, grinds the beans, fills the brew chamber with the ground coffee, tamps the coffee with the right tamping pressure, brews coffee, and dispenses the brewed coffee.

The UE (or application running on the UE) communicates directly with the coffee machine (e.g. as shown at step 512 of Fig. 8 and at step 620 of Fig. 9), and additionally communicates with the backend architecture (e.g. as shown at step 508 of Fig. 8 and step 618 of Fig. 9). The coffee machine communicates with the cloud (e.g. as shown at step 514 of Fig. 8 and step 622 of Fig. 9).

Initially, the user may select a recipe from a list of recipes in an application running on their UE. The first identifier ('Beverage ID'), which is assigned to the request, is generated at the UE. For example, the application running on the UE randomly generates the Beverage ID as 'yyyy' for the requested beverage. A second identifier ('Appliance ID'), which is assigned to the coffee machine, is linked to the user account to which the application is logged in. The Appliance ID is 'xxxx'.

As described earlier with reference to step 508 of Fig. 8 and step 618 of Fig. 9, the UE (e.g. the app application on the UE) sends a message to the backend architecture, e.g. "I'm going to send brew request yyyy on coffee machine xxxx. If you hear back on this process from coffee machine xxxx, please call back on $$$$". The number $$$$ is the first PN token. As described earlier with reference to step 512 of Fig. 8 and step 620 of Fig. 9), the UE (e.g. the app application on the UE) sends a brew command to the coffee machine. This brew command comprises a brew recipe (based on the user's selection), the Beverage ID, and the Appliance ID. Optionally, the brew command may comprise additional instructions for the coffee machine, e.g. to activate a particular LED whilst brewing.

When the coffee machine is ready, as described earlier with reference to step 514 of Fig. 8 and step 622 of Fig. 9, the coffee machine sends a status update to the cloud for the backend architecture to acquire (as described earlier with reference to step 516 of Fig. 8 and step 624 of Fig. 9), including the Appliance ID and the Beverage ID, e.g. "machine xxxx has finished brewing drink yyyy". Optionally, the coffee machine can also send status updates during brewing, e.g. "machine xxxx is brewing drink yyyy" or "drink yyyy brewed on machine xxxx is x% ready". If the coffee machine is out of water or coffee, or needs maintenance, it may also provide an appropriate message. This general message may be sent to all applications that have a user account linked to the coffee machine or it may only be sent to that/those applications that have initiated a brew request for the coffee machine.

As described earlier with reference to step 510 of Fig. 8, the backend architecture recognises the Beverage ID and optionally also the Appliance ID and, as described earlier with reference to step 520 of Fig. 8 and step 628 of Fig.9, causes a push notification to be sent to the UE (or application) that initiated the beverage request. This can be performed since the backend architecture knows which PN token is linked to the Beverage ID or the particular combination of the Beverage ID + Appliance ID. The use of the push notification makes the process more efficient. However, it is equally possible that the push notifications are not used and the UE (or application running on the UE) instead requests a status update. In such a case, no PN token is required. The UE (or application running on the UE) can, in any case, recognise the Beverage ID.

In another example use case , the domestic appliance is a coffee machine working with capsules that include ground coffee. In this example, all communication runs via the cloud (or at least two clouds) so there is no direct communication between the UE (or the application running on the UE) and the coffee machine.

The UE (or application running on the UE) requests a list of all possible recipes and receives that list from the cloud, e.g. a first cloud. The user selects a recipe from the list. Optionally, the application may allow the user to customise some brew parameters, e.g. temperature and/or volume. Next, the UE (or application running on the UE) sends a brew command to a second cloud. The second cloud may be the same cloud as the first cloud mentioned earlier or a different cloud. The brew command comprises the (customized) recipe and a Beverage ID 'yyyy', which has been randomly generated. The brew command may also comprise the Appliance ID 'xxxx' or this may be stored in the cloud, e.g. in the user account to which the application is logged in. Optionally, the brew command may comprise additional instructions, such as regarding which LED is to be illuminated on the coffee machine while brewing, e.g. a ristretto LED, an espresso LED, etc.

The second cloud sends the brew command to the coffee machine. However, it is equally possible that the UE (or application running on the UE) may send the brew command directly to the coffee machine. The coffee machine retrieves the information from the brew command, starts brewing, and indicates to the first cloud that its status has changed to "brewing". The UE (or application running on the UE) can ask the first cloud (or second cloud) whether the coffee machine is brewing (e.g. via the Beverage ID and/or the machine ID). The first cloud can respond with a status update (e.g. progress: x% ready). The communication is not via a push notification in this example. Instead, the UE (or application running on the UE) asks the first cloud what the status is and the first cloud responds. The first cloud does not send the information to the UE (or application running on the UE) on its own motion. However, it is equally possible that the communication may be via push notification.

The coffee machine does not know for which user (e.g. in case of two or more users) it is brewing. It merely receives a recipe with a Beverage ID. All knowledge/data is either stored in the first cloud (e.g. recipes, the user(s) that is/are linked to the account, etc.) or in the application (e.g. recalculation of the recipes when brew parameters are customised in the application by the user). Thus, the coffee machine itself can be simple and low cost.

In another example use case, a user instructs a smart speaker, e.g. "Alexa, brew a ristretto for X, now". The smart speaker sends instructions to a first cloud. The first cloud can be the cloud environment referred to herein. The speech is converted into text. The first cloud recognises certain expected key words/commands, e.g. "ristretto" and "now" (or a date/time). The first cloud sends a piece of code to a second cloud, e.g. "X has asked for a ristretto now". The second cloud can be the backend architecture referred to herein. The piece of code verifies that customer X is linked to the user account Y, which in turn is linked to the coffee machine Z. The Beverage ID may be generated by the second cloud, or it may be generated by the first cloud and provided to the second cloud. The second cloud creates the brew request comprising the Beverage ID and sends it to the coffee machine Z.

There is also provided a computer program product comprising a computer readable medium. The computer readable medium has a computer readable code embodied therein. The computer readable code is configured such that, on execution by a suitable computer or processor, the computer or processor is caused to perform the method described herein. The computer readable medium may be, for example, any entity or device capable of carrying the computer program product. For example, the computer readable medium may include a data storage, such as a ROM (such as a CD-ROM or a semiconductor ROM) or a magnetic recording medium (such as a hard disk). Furthermore, the computer readable medium may be a transmissible carrier, such as an electric or optical signal, which may be conveyed via electric or optical cable or by radio or other means. When the computer program product is embodied in such a signal, the computer readable medium may be constituted by such a cable or other device or means. Alternatively, the computer readable medium may be an integrated circuit in which the computer program product is embedded, the integrated circuit being adapted to perform, or used in the performance of, the method described herein.

There are thus provided improved techniques for beverage preparation management and, more specifically, advantageous techniques for managing a request for preparation of a beverage and a status update on the preparation of the beverage.

The techniques described herein enable a first entity to identify that a status update relates to a request for preparation of a beverage to which the first entity assigned a first identifier, without there being a need to actually identify the first entity or the user who made the request. Since a first identifier is assigned to the request for preparation of the beverage, there is no need to share user specific data and/or information with any other entity or network which is used in the beverage preparation process. As such, the techniques described herein provide enhanced confidentiality and privacy for a user. Such techniques are also beneficial in complying with General Data Protection Regulation (GDPR) principles.

Moreover, the techniques described herein enable multiple users of a single domestic appliance to be made aware of the preparation status of a requested beverage. Each user can be made aware of the progress made in preparing a specifically requested beverage without other users (e.g. using the same account) being able to deduct (e.g. via a cloud network) whose beverage is being prepared.

Furthermore, the techniques described herein require less memory capacity for a domestic appliance. In more detail, since the domestic appliance does not need to store data and/or information corresponding to individual users of the domestic appliance, the need for memory capacity in the domestic appliance is reduced. This benefit is enhanced as the techniques described herein avoid the need for large PN tokens to be stored in the domestic appliance.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for managing a request for preparation of a beverage, wherein the method is performed by a first entity (100), the method comprising:
assigning (110) a first identifier to the request, wherein the request is generated at a user equipment (500, 600); and
transmitting (112, 508, 512, 618, 620) a message towards a second entity (200), wherein the message comprises the first identifier, and
wherein the first identifier allows the first entity (100) to determine whether or not a status update, generated by a domestic appliance (502, 602) that is to prepare the beverage, corresponds to a status update on the preparation of the beverage.

2. A method for managing a status update on preparation of a beverage, wherein the method is performed by a first entity (100), the method comprising:
acquiring (114, 520, 628) information from a third entity (300), wherein the information comprises a status update generated by a domestic appliance (502, 602) that is to prepare the beverage and a first identifier assigned to a request for the preparation of the beverage, and
wherein the request is generated at a user equipment (500, 600) and the first identifier allows the first entity (100) to determine whether or not the status update generated by the domestic appliance (502, 602) corresponds to a status update on the preparation of the beverage.

3. The method as claimed in claim 2, wherein:
the first entity (100) is an entity separate from the user equipment (500, 600) and the method comprises providing the status update to the user equipment (500, 600); or
the first entity (100) is the user equipment (500, 600) and the method comprises determining, based on the first identifier, whether or not the status update generated by the domestic appliance (502, 602) corresponds to a status update on the preparation of the beverage.

4. The method as claimed in claim 2 or 3, wherein acquiring the information comprises:
receiving (520, 628) the information via a push notification; or
acquiring the information in response to a pull request for a status update.

5. A method for managing a request for preparation of a beverage, wherein the method is performed by a second entity (200), the method comprising:
receiving (210, 508, 512, 618, 620) a message from a first entity (100), wherein the message comprises a first identifier assigned to the request, and
wherein the request is generated at a user equipment (500, 600) and the first identifier allows the first entity (100) to determine whether or not a status update, generated by a domestic appliance (502, 602) that is to prepare the beverage, corresponds to a status update on the preparation of the beverage.

6. The method as claimed in claim 1 or 5, wherein the message comprises one or more of the request, a second identifier that is assigned to the domestic appliance (502, 602), and a first push notification token for use in providing a push notification to the user equipment (500, 600).

7. The method as claimed in claim 6 when dependent on claim 5, wherein:
the message comprises the first push notification token; and
the method comprises storing (510) the first push notification token and the first identifier in a memory (511), wherein the first push notification token is associated with the first identifier in the memory (511).

8. A method for managing a status update on preparation of a beverage, wherein the method is performed by a third entity (300), the method comprising:
providing (310, 520, 628) information to a first entity (100), wherein the information comprises a status update generated by a domestic appliance (502, 602) that is to prepare the beverage and a first identifier assigned to a request for the preparation of the beverage, and
wherein the request is generated at a user equipment (500, 600) and the first identifier allows the first entity (100) to determine whether or not the status update generated by the domestic appliance (502, 602) corresponds to a status update on the preparation of the beverage.

9. The method as claimed in claim 8, wherein providing the information comprises:
transmitting (520, 628) the information via a push notification; or
providing the information in response to a pull request for a status update.

10. The method as claimed in claim 9, wherein the method comprises:
determining (518) a first push notification token from one or more push notification tokens stored in a memory (511), wherein the first push notification token is associated with the first identifier in the memory (511); and
transmitting (520, 628) the information via the push notification using the determined first push notification token.

11. The method as claimed in any of the preceding claims, wherein:
the first identifier is a numerical value randomly selected from a range of numerical values; and/or
the first identifier is different from another first identifier assigned to a request, generated at another user equipment, for preparation of another beverage to be prepared by the same appliance (502, 602).

12. The method as claimed in claim 11, wherein:
the first identifier is a numerical value randomly selected from a first half of the range to indicate that the user equipment is to receive push notifications; or
the first identifier is a numerical value randomly selected from a second half of the range to indicate that the user equipment is not to receive push notifications.

13. The method as claimed in any of the preceding claims, wherein:
the status update comprises an indication that the preparation of the beverage is complete; or
the status update comprises any one or more of an indication that the preparation of the beverage is partially complete, a percentage of the beverage that has been prepared, information on the position of the beverage in a queue of beverages that are to be prepared by the domestic appliance (502, 602), and information indicative that an issue with the domestic appliance (502, 602) is preventing the completion of the preparation of the beverage.

14. A system comprising any one or more of:
a first entity (100) comprising processing circuitry configured to operate in accordance with the method as claimed in claim 1 or any of claims 6 and 11 to 13 when directly or indirectly dependent on claim 1, and/or claim 2 or any of claims 3, 4 and 11 to 13 when directly or indirectly dependent on claim 2;
a second entity (200) comprising processing circuitry configured to operate in accordance with the method as claimed in claim 5 or any of claims 6, 7 and 11 to 13 when directly or indirectly dependent on claim 5; and
a third entity (300) comprising processing circuitry configured to operate in accordance with the method as claimed in claim 8 or any of claims 9 to 13 when directly or indirectly dependent on claim 8.

15. A computer program product comprising a computer readable medium, the computer readable medium having a computer readable code embodied therein, the computer readable code being configured such that, on execution by a suitable computer or processor, the computer or processor is caused to perform the method as claimed in any of claims 1-13.
